# EUROPEAN PATENT APPLICATION

(11) **EP 4 485 424 A1**
(43) Date of publication of application: **01.01.2025**
(21) Application number: 23759568.1
(22) Date of filing: 25.01.2023
(51) Int. Cl.: G08G 3/00, G05D 1/00, G06T 7/00

(54) **TARGET MONITORING SYSTEM, TARGET MONITORING METHOD, AND PROGRAM**

(30) Priority: 25.02.2022 JP 2022027915
(71) Applicant: Furuno Electric Co., Ltd., Nishinomiya-City, Hyogo 662-8580 (JP)
(72) Inventor: TAKAHASHI, Yuta, Nishinomiya-City, Hyogo 662-8580 (JP)
(74) Representative: Müller Hoffmann & Partner
(86) International application number: PCT/JP2023/002268
(87) International publication number: WO 2023/162562

(57) **Abstract**

[Problem] To provide a target monitoring system that easily associates a target detected from an image captured by a camera and a target detected by another detection device. [Solution] A target monitoring system includes: a camera mounted on a ship; a detection device that is mounted on the ship and detects the actual position of a target present around the ship; an image recognition unit that detects the in-image position of the target included in an image captured by the camera; a distance estimation unit that estimates the range of the distance from the ship to the target on the basis of the in-image position of the target; and a target identification unit that identifies the target detected from the image and the target detected by the detection device, on the basis of the estimated range of the distance and the detected actual position.

## Description

### Technical Field

The disclosure relates to a target monitoring system, a target monitoring method, and a program.

### Related Art

Conventionally, a technique for detecting a target in the sea, such as a ship, in an image imaged by a camera mounted in a ship through image recognition is known.

### Citation List

### Patent Literature

Patent Document 1: WO 2020049634

### SUMMARY

### Technical Problem

However, even if a target in an image can be detected through image recognition, the actual position of the target cannot be accurately acquired. Therefore, the correspondence relationship between the target detected from the image and the target detected by another detecting apparatus is unclear.

The disclosure has been made in view of the above issue, and an objective of the disclosure is to provide a target monitoring system, a target monitoring method, and a program with which it is easy to associate a target detected from an image imaged by a camera and a target detected by another detecting apparatus.

### Solution to Problem

In order to solve the issue, a target monitoring system according to an aspect of the disclosure includes: a camera, mounted in a ship; a detecting apparatus, mounted in the ship and detecting an actual position of a target present around the ship; an image recognizing unit, detecting an in-image position of the target included in an image imaged by the camera; a distance estimating unit, estimating a range of a distance from the ship to the target based on the in-image position of the target; and a target identifying unit, identifying the target detected from the image and the target detected by the detecting apparatus based on the range of the distance that is estimated and the actual position that is detected. In this way, it is easy to associate the target detected from the image imaged by the camera and the target detected by another detection apparatus.

In the above aspect, it may also be that the image recognizing unit detects a region of the target in the image, and the distance estimating unit estimates the range of the distance based on an in-image position of a lower end of the region of the target. Since the lower end of the region of the target corresponds to the waterline of the target, accordingly, the accuracy in estimating the range of the distance is increased.

In the above aspect, it may also be that the distance estimating unit sets, as the range of the distance, a range of a particular size with a distance estimated based on the in-image position of the lower end of the region of the target as reference. Accordingly, the error can be considered to estimate the range of the distance.

In the above aspect, it may also be that the distance estimating unit discards detection of the target in a case where the range of the distance is above a horizon. Accordingly, in the case of an erroneous detection above the horizon, the detection of the target can be discarded.

In the above aspect, it may also be that the distance estimating unit sets a position of the horizon based on a height and a posture of the camera. Accordingly, it is possible to improve the accuracy in estimating the range of the distance.

In the above aspect, it may also be that the target monitoring system further includes a posture detecting unit detecting a posture of the ship, and the distance estimating unit estimates the range of the distance further based on the posture of the ship. Accordingly, it is possible to improve the accuracy in estimating the range of the distance.

In the above aspect, it may also be that the image recognizing unit detects a region of the target in the image, and the distance estimating unit estimates the range of the distance based on a width of the region of the target in the horizontal direction and a particular assumed length. Accordingly, the range of the distance can be estimated from the width of the region of the target in the horizontal direction.

In the above aspect, it may also be that the distance estimating unit estimates a maximum distance from the ship to the target. Accordingly, the maximum distance can be estimated.

In the above aspect, it may also be that the target monitoring system further includes a ship type acquiring unit acquiring a ship type of the target, and the distance estimating unit estimates the range of the distance based on the particular assumed length in accordance with the ship type of the target. Accordingly, it is possible to improve the accuracy in estimating the range of the distance.

In the above aspect, it may also be that the target monitoring system further includes a course acquiring unit acquiring a course of the target, and the distance estimating unit estimates the range of the distance based on the particular assumed length in accordance with the course of the target. Accordingly, it is possible to improve the accuracy in estimating the range of the distance.

In the above aspect, it may also be that, in a case where multiple targets detected by the detecting apparatus are present within the range of the distance that is estimated, the target identifying unit identifies the target detected from the image as one closest to the ship among the targets Accordingly, for the purpose of avoidance, it is possible to focus on the target close to the ship.

In the above aspect, it may also be that the distance estimating unit estimates the range of the distance based on a height, a posture, and a camera parameter of the camera. Accordingly, it is possible to improve the accuracy in estimating the range of the distance.

In the above aspect, it may also be that the detecting apparatus is a radar, and the target monitoring system further includes a display unit displaying the range of the distance on a radar image based on echo data detected by the radar. Accordingly, the target detected from the image can be associated with the target detected by the radar, and the range of the distance can be determined on a radar image.

In the above aspect, it may also be that the detecting apparatus is an automatic identification system (AIS). Accordingly, the target detected from the image can be associated with a target such as an other ship, etc., received by the AIS.

In the above aspect, it may also be that the detecting apparatus is an electronic charge display and information system (ECDIS). Accordingly, the target detected from the image can be associated with a target such as lighthouse included in the electronic chart.

In addition, a target monitoring method according to another aspect of the disclosure includes: acquiring an image imaged by a camera mounted in a ship; detecting an in-image position of the target comprised in the image; estimating a range of a distance from the ship to the target based on the in-image position of the target; and acquiring an actual position of the target detected by a detecting apparatus mounted in the ship and present around the ship; and identifying the target detected from the image and the target detected by the detecting apparatus based on the range of the distance that is estimated and the actual position that is detected. In this way, it is easy to associate the target detected from the image imaged by the camera and the target detected by another detection apparatus.

In addition, a program according to another aspect of the disclosure is executed by a computer to: acquire a range of a distance from a ship to a target that is estimated based on an in-image position of the target detected in an image imaged by a camera mounted in the ship; acquire an actual position of the target detected by a detecting apparatus mounted in the ship and present around the ship; and identify the target detected from the image and the target detected by the detecting apparatus based on the range of the distance that is estimated and the actual position that is detected. In this way, it is easy to associate the target detected from the image imaged by the camera and the target detected by another detection apparatus.

### BRIEF DESCRIPTION OF DRAWINGS

[FIG. 1] FIG. 1 is a diagram illustrating an example of a target monitoring system.
[FIG. 2] FIG. 2 is a diagram illustrating an example of a target monitoring device.
[FIG. 3] FIG. 3 is a diagram illustrating an example of a target management DB.
[FIG. 4] FIG. 4 is a diagram illustrating a recognition example of an image.
[FIG. 5] FIG. 5 is a diagram illustrating an example of a boundary box.
[FIG. 6] FIG. 6 is a diagram illustrating a recognition example of an image.
[FIG. 7] FIG. 7 is a diagram illustrating an example of a camera management DB.
[FIG. 8] FIG. 8 is a diagram illustrating an example for displaying a distance range.
[FIG. 9] FIG. 9 is a diagram illustrating an example of a target monitoring method.
[FIG. 10] FIG. 10 is a diagram for describing a means for estimating the distance range.
[FIG. 11] FIG. 11 is a diagram for describing a means for estimating the distance range.
[FIG. 12] FIG. 12 is a diagram for describing a means for estimating the distance range.
[FIG. 13] FIG. 13 is a diagram for describing a means for estimating the distance range.
[FIG. 14] FIG. 14 is a diagram for describing a means for estimating the distance range.
[FIG. 15] FIG. 15 is a diagram for describing a means for estimating the distance range.
[FIG. 16] FIG. 16 is a diagram for describing a means for estimating the distance range.
[FIG. 17] FIG. 17 is a diagram for describing a means for estimating the distance range.

### DESCRIPTION OF EMBODIMENTS

In the following, the embodiments of the disclosure are described with reference to the drawings.

### [System outline]

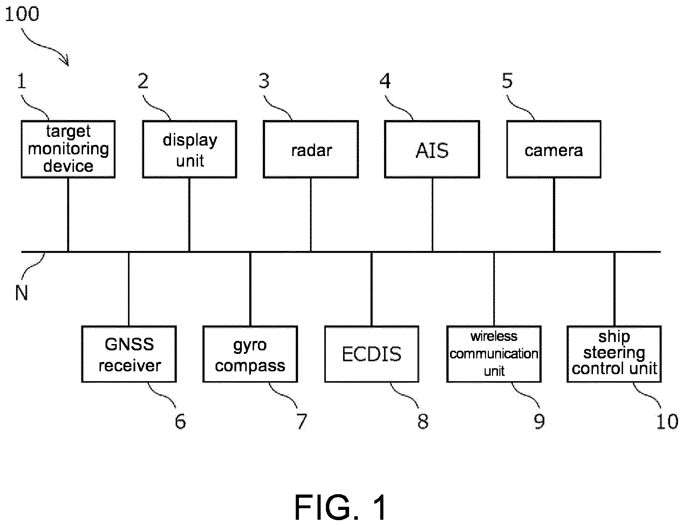

FIG. 1 is a block diagram illustrating a configuration example of a target monitoring system 100. The target monitoring system 100 is a system mounted in a ship. In the following description, the ship in which the target monitoring system 100 is mounted is referred to as "own ship", and another ship is referred to as "other ship".

The target monitoring system 100 includes a target monitoring device 1, a display unit 2, a radar 3, an AIS 4, a camera 5, a GNSS receiver 6, a gyro compass 7, an ECDIS 8, a wireless communicating unit 9, and a ship steering control unit 10. Such components are connected with a network N, such as LAN, and are able to communicate with each other through network communication.

The target monitoring device 1 a computer that includes a CPU, a RAM, a ROM, a nonvolatile memory, and an input/output interface, etc. The CPU of the target monitoring device 1 executes an information process in accordance with a program loaded from the ROM or the nonvolatile memory to the RAM. The program may also be supplied via an information storage medium, such as an optical disc or a memory card, and may also be supplied via a communication network such as the Internet or an LAN.

The display unit 2 displays a display image generated by the target monitoring device 1. The display unit 2 also displays a radar image, a camera image, or an electronic chart, etc. The display unit 2, for example, is a display device having a touch sensor, i.e., a so-called touch panel. The touch sensor detects an indicated position in an image indicated by the user's finger, etc. However, the disclosure is not limited thereto. The indicated position may also be input by using a trackball, etc.

The radar 3 emits radio waves around the own ship, receives the reflected waves thereof, and generates echo data based on the received signals. In addition, the radar 3 recognizes a target from the echo data, and generates target tracking (TT) data indicating the position and the velocity of the target.

The automatic identification system (AIS) 4 receives AIS data from other ships present around the own ship or from land control. A VHF data exchange system (VDES) may also be used, instead of being limited to AIS. The AIS data include recognition symbols, ship names, positions, courses, velocities, ship types, ship body lengths, and destinations, etc., of other ships.

The camera 5 is a digital camera that images the outside from the own ship to generate image data. The camera 5 is disposed at a bridge of the own ship and toward a bow orientation, for example. The camera 5 may be a camera having pan/tilt/zoom functions, i.e., a so-called PTZ camera. In addition, the camera 5 may also include an image recognizing unit that estimates a position and a type of a target, such as other ships, included in the imaged image by using an object detecting model.

The GNSS receiver 6 detects the position of the own ship based on radio waves received from the global navigation satellite system (GNSS). The gyro compass 7 detects a bow orientation of the own ship. A GPS compass may also be used, instead of being limited to the gyro compass.

The electronic chart display and information system (ECDIS) 8 acquires the position of the own ship from the GNSS receiver 6 and displays the position of the own ship on an electronic chart. In addition, the ECDIS 8 also displays a planned route on the electronic chart. However, the disclosure is not limited thereto. A GNSS plotter may also be used.

The wireless communication unit 9 includes various wireless components for ultra short wave band, very short wave band, medium and short wave band, short wave band, medium wave band, etc., for realizing the communication with other ships or land control.

The ship steering control unit 10 is a control device for realizing automatic ship steering, and controls a steering device of the own ship. In addition, the ship steering control unit 10 may also control the engine of the own ship.

In the embodiment, the target monitoring device 1 is an independent device. However, the disclosure is not limited thereto, and may also be integrated with another device, such as the radar 3 or the ECDIS 8. That is, the functional units of the target monitoring device 1 may also be realized by other devices.

In the embodiment, the target monitoring device 1 is mounted in the own ship and used to monitor a target, such as an other ship, present around the own ship. However, the disclosure is not limited thereto. For example, the target monitoring device 1 may also be disposed in the land control and configured to monitor a ship present in a controlled sea area.

### [Device configuration]

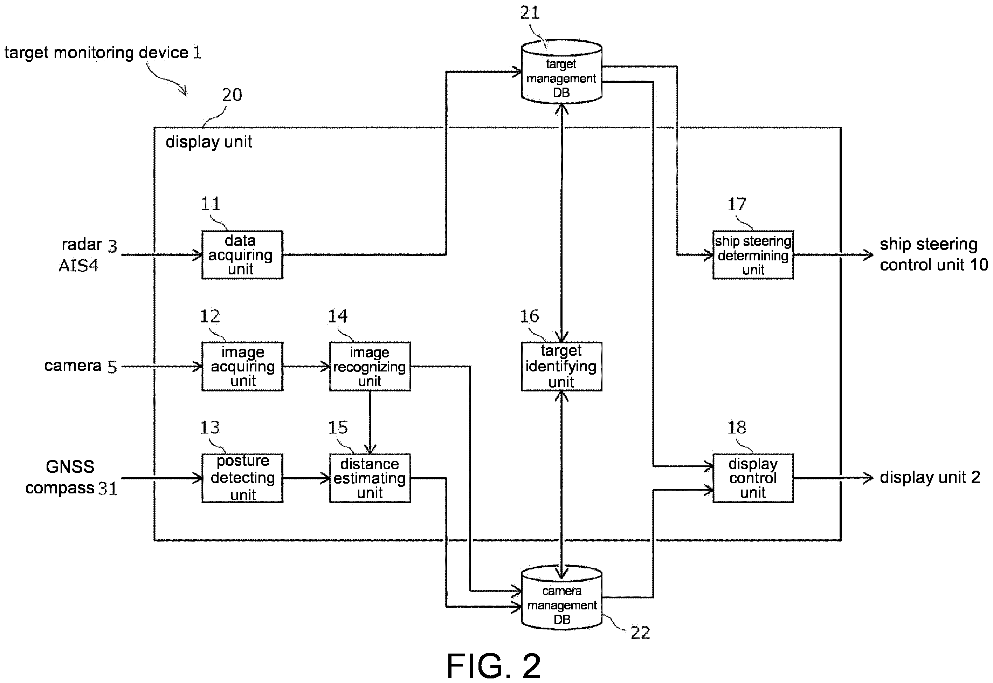

FIG. 2 is a block diagram illustrating a configuration example of the target monitoring device 1. The control unit 20 of the target monitoring device 1 includes a data acquiring unit 11, an image acquiring unit 12, a posture detecting unit 13, an image recognizing unit 14, a distance estimating unit 15, a target identifying unit 16, a ship steering determining unit 17, and a display control unit 18. These functional units are realized by executing information processing according to a program by using the control unit 20. The ship steering determining unit 17 may also be arranged outside the target monitoring device 1.

The target monitoring device 1 further includes a target management database (DB) 21 and a camera management database (DB) 23. The storage units thereof are provided in the memory of the target monitoring device 1.

The data acquiring unit 11 sequentially acquires, as target data, TT data generated by the radar 3, and registers the target data in the target management DB 21. The data acquiring unit 11 sequentially acquires, as target data, the AIS data received by the AIS 4 and registers the AIS data in the target management DB 21.

The radar 3 and the AIS 4 are examples of the detecting apparatus detecting the actual position of a target in the sea, such as other ships present around the own ship. In addition, the ECDIS 8 acquiring the actual position of a target, such as a buoy or a lighthouse, from an electronic chart may also be an example of the detecting apparatus. The actual position is a horizontal position in the actual space.

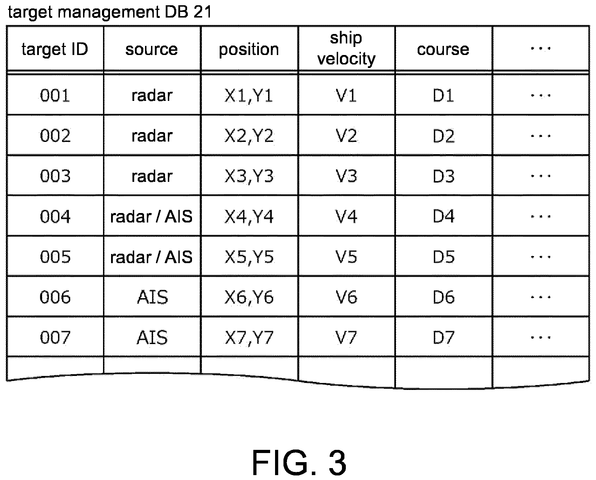

As shown in FIG. 3, the target data registered in the target management DB 21 include "position", "ship velocity", and "course", etc., of the target, such as the other ship, for example. The position of the target detected by the radar 3 is a relative position with respect to the own ship. Therefore, the relative position can be converted into an absolute position by using the position of the own ship detected by the GNSS receiver 6.

"Source" represents the source of the target data. That is, "source" represents whether the target is detected by the radar 3 or the AIS 4. In the case where the position of the target detected by the radar 3 and the position of the target detected by the AIS 4 are common, these target data are integrated.

In addition, the target management DB 21 may further include the target track detected by the radar 3, the lapsed time since detected, the size of an echo image, and the signal strength of reflected waves, etc., and may also include the type, the ship name, the ship body length, the ship body width, and the destination, etc., of another ship detected by AIS 4.

Referring to FIG. 2 again, the image acquiring unit 12 acquires an image including the target, such as an other ship, imaged by the camera 5. Specifically, the image acquiring unit 12 sequentially acquires time-series images from the camera 5, and sequentially provides the time-series images to the image recognizing unit 14. The time-series images are, for example, still images (frames) included in motion image data.

The posture detecting part 13 detects the posture of the own ship based on a detection signal from a GNSS compass 31 mounted in the own ship. The posture of the own ship is, for example, a roll angle, a pitch angle, and a yaw angle, etc., of the own ship. The posture detecting unit 13 may also detect the posture of the own ship based on a detection signal from a gyro sensor or a magnetic sensor.

The image recognizing unit 14 detects the target included in the image acquired by the image acquiring unit 12 and the in-image position of the target, and registers the target data of the detected target in the camera management DB 22.

Specifically, the image recognizing unit 14 detects the region of the target included in the image. In addition, the image recognizing unit 14 detects the type of the target together with the region of the target. The type of the target may be a ship type, such as a tanker or a fishing boat. In addition, the type of the target may further include, for example, a buoy or a lighthouse, etc.

For example, the image recognizing unit 14 calculates the region of the target included in the image, the type of the target, and the estimation reliability by using a learned model generated in advance through machine learning. However, the disclosure is not limited thereto. The image recognizing unit 14 may also recognize the region included in the image and the type of the target by using a rule base.

The learned model is an object detection model, such as a single shot multibox detector (SSD) or a you only look once (YOLO), and detects a boundary box surrounding the target included in the image as the region of the target. However, the disclosure is not limited thereto. The learned model may also be a region split model, such as semantic segmentation or instance segmentation.

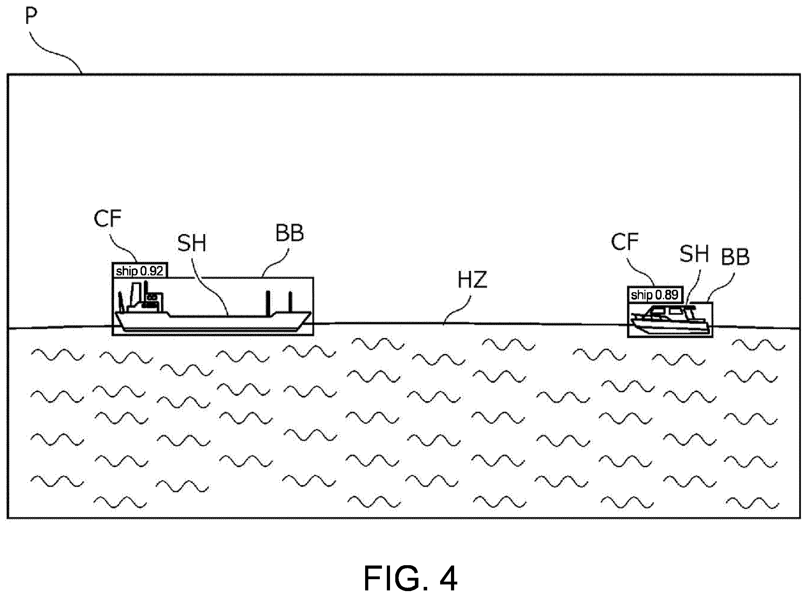

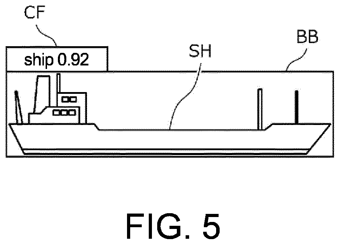

FIG. 4 is a diagram illustrating an example of an image P recognized by the image recognizing unit 14. FIG. 5 is a diagram in which a boundary box BB is enlarged. A target SH included in the image P is surrounded by a boundary box BB in a rectangular shape. A label CF in which the type of the target SH and the estimation reliability are recorded is added to the boundary box BB. The lower end of the boundary box BB corresponds to the waterline of the target SH.

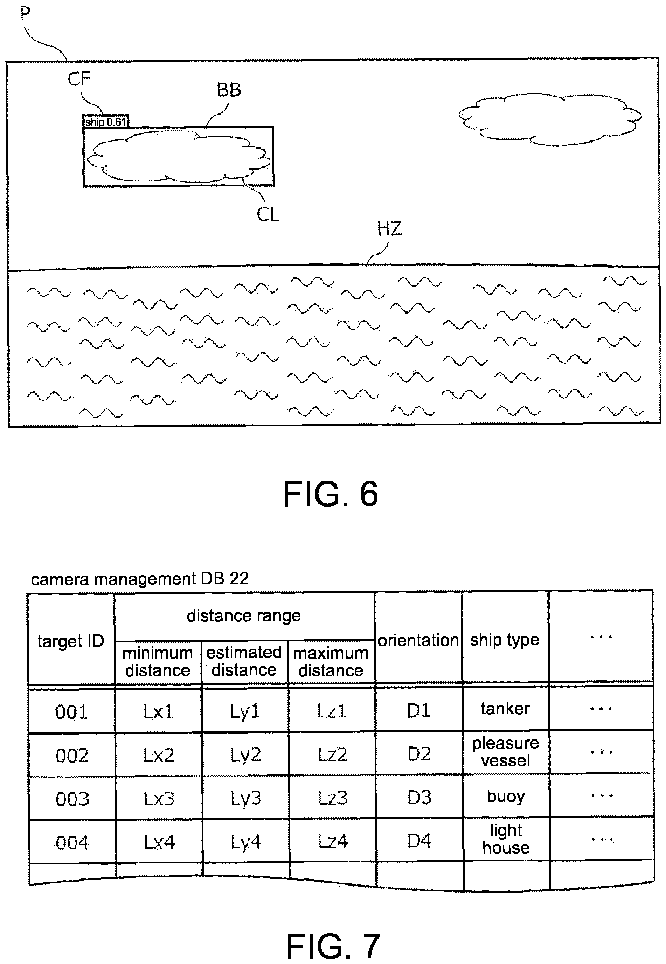

FIG. 6 is a diagram illustrating an erroneous recognition example. The same figure shows an example in which a cloud CL on a horizon HZ is erroneously recognized as a target and surrounded by the boundary box BB.

Referring to FIG. 2 again, the distance estimating unit 15 estimates a distance range from the own ship to the target based on the in-image position of the target detected by the image recognizing unit 14, and registers the distance range in the camera management DB 22. That is, the distance estimating unit 15 narrows down the distance range of the target.

In addition, the distance estimating unit 15 estimates the distance range of the target further based on the posture of the own ship detected by the posture detecting unit 13, in addition to the position of the target in the image. Details regarding the means of estimating the distance range will be described in the following.

As shown in FIG. 7, the target data registered in the camera management DB 22 includes "distance range", "orientation", and "ship type", etc., calculated by the image recognizing unit 14 and the distance estimating unit 15.

The distance range includes an estimated distance calculated based on the in-image position of the target and a minimum distance and a maximum distance in accordance with the estimated range. The orientation is the orientation of the target with respect to the own ship, and is calculated based on an imaging direction of the camera 5 and the in-image position of th e target.

Referring to FIG. 2 again, the target identifying unit 16 identifies the target detected from the image and the target detected by the radar 3 or the AIS 4 based on the distance range estimated by the distance estimating unit 15 and the actual position of the target detected by the radar 3 or the AIS 4.

Specifically, in the case where the actual position of the target detected by the radar 3 or the AIS 4 is included in the distance range estimated for the target detected from the image, the target identifying unit 16 determines that the targets are the same.

In other words, in the case where the position of the target registered in the target management DB 21 (see FIG. 3) is included in the distance range in the orientation of the target registered in the camera management DB 22 (see FIG. 7), the target identifying unit 16 determines that the targets are the same. At this time, the target identifying unit 16 may also integrate the target data registered in the camera management DB 22 with the target data registered in the target management DB 21.

In the case where multiple targets detected by the radar 3 or the AIS 4 are present in the distance range estimated for the target detected from the image, the target identifying unit 16 identifies the target detected from the image as the target closest to the own ship among the multiple targets.

The ship steering determining unit 17 performs ship steering determination based on the target data registered in the target management DB 21, and, in the case of determining that it is necessary to avoid a target, causes the ship steering control unit 10 to perform an avoidance steering operation. Specifically, the ship steering control unit 10 calculates an avoidance route for avoiding the target by using an avoidance steering algorithm, and controls the ship steering device and an engine, etc., so that the own ship follows the avoidance route.

The display control unit 18 generates a display image including a target symbol indicating the target based on the target data registered in the target management DB 21 and outputs the display image to the display unit 2. The display image is, for example, a radar image, an electronic chart, or an image in which a radar image and an electronic chart are synthesized.

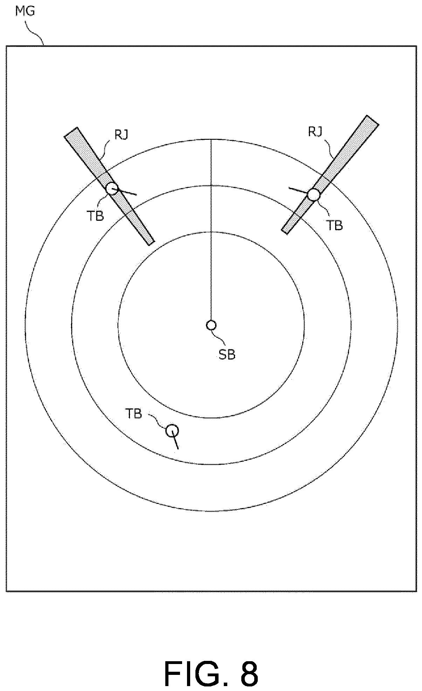

FIG. 8 is a diagram illustrating an example of a display image MG generated by the display control unit 18. The same figure illustrates an example in which the display image MG is a radar image based on echo data detected by the radar 3. The display image MG indicates a two-dimensional space with an own ship position SB as the center, and a target symbol TB is plotted at an in-image position corresponding to the actual position of the target.

In addition, the display control unit 18 displays a distance range symbol RJ indicating the distance range estimated by the distance estimating unit 15 on the display image MG. That is, the display control unit 18 disposes, on the display image MG, the distance range symbol RJ corresponding to the orientation and the distance range of the target registered in the camera management DB 22 (see FIG. 7).

### [Target monitoring method]

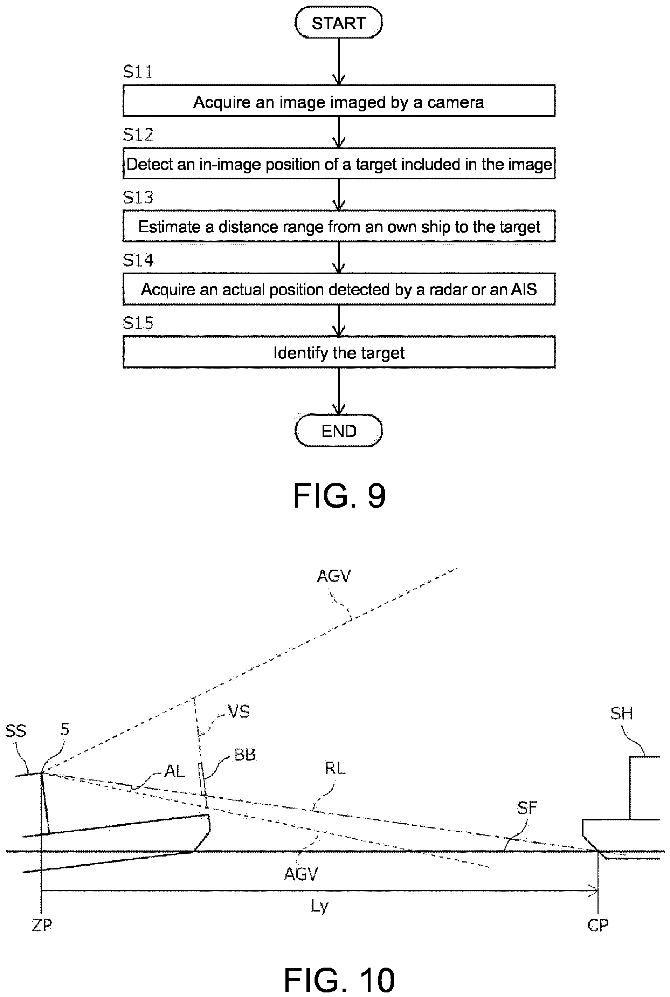

FIG. 9 is a diagram illustrating a procedural example of a target monitoring method realized in the target monitoring system 100. The control unit 20 of the target monitoring device 1 executes an information process shown in the same figure according to the program.

Firstly, the control unit 20 acquires an image imaged by the camera 5 (S11, a process as the image acquiring unit 12).

Second, the control unit 20 detects the in-image position of the target included in the image that is acquired (S12, a process of the image recognizing unit 14).

Then, the control unit 20 estimates the distance range from the own ship to the target based on the in-image position of the detected target (S13, a process of the distance range estimating unit 15).

Then, the control unit 20 acquires the actual position of the target detected by the radar 3 or the AIS 4 (S14, a process of the data acquiring unit 11). The process may also be performed before S11 to S13.

Then, the control unit 20 identifies the target detected from the image and the target identified by the radar 3 or the AIS 4 (S 15, a process of the target identifying unit 15).

According to the above, a series of procedures of the target monitoring method end. Accordingly, it is possible to associate the target detected from the image and the target detected by the radar 3 and the AIS 4.

### [First estimating means]

A first estimating means for the distance range by the distance estimating unit 15 is described. FIGs. 10 to 12 are side views for illustrating the first estimating means. In the drawings, SS represents the own ship, SH represents the target, and SF represents the water surface. ZP represents the horizontal position of the camera 5 mounted in the own ship SS.

AGV represents the view angle of the camera 5 in the vertical direction. VS represents a virtual screen that serves as an image. BB represents the boundary box (see FIG. 4) disposed in the image.

As shown in FIG. 10, RL represents a sight line from the camera 5 toward the waterline of the target SH. The lower end of the boundary box BB is located on the sight line RL from the camera 5 toward the waterline of the target SH. CP represents the horizontal position of the waterline of the target SH. In other words, CP represents the intersection between the sight line RL and the water surface SF.

Ly represents the estimated distance from the horizontal position ZP of the camera 5 to the horizontal position CP of the waterline of the target SH. That is, Ly represents the estimated distance from the own ship to SS the target SH.

AL represents an angle from the lower limit of the view angle AGV in the vertical direction or the angle of the lower end of the virtual screen VS to the lower end of the boundary box BB. The angle AL is calculated based on the view angle AGV in the vertical direction of the camera 5, the length of the virtual screen VS in the vertical direction, and the length from the lower end of the virtual screen VS to the lower end of the boundary box BB.

The length of the virtual screen VS in the vertical direction is a length (number of pixels) of the image in the vertical direction. The length from the lower end of the virtual screen VS to the lower end of the boundary box BB is the length (number of pixels) from the lower end of the image to the lower end of the boundary box BB.

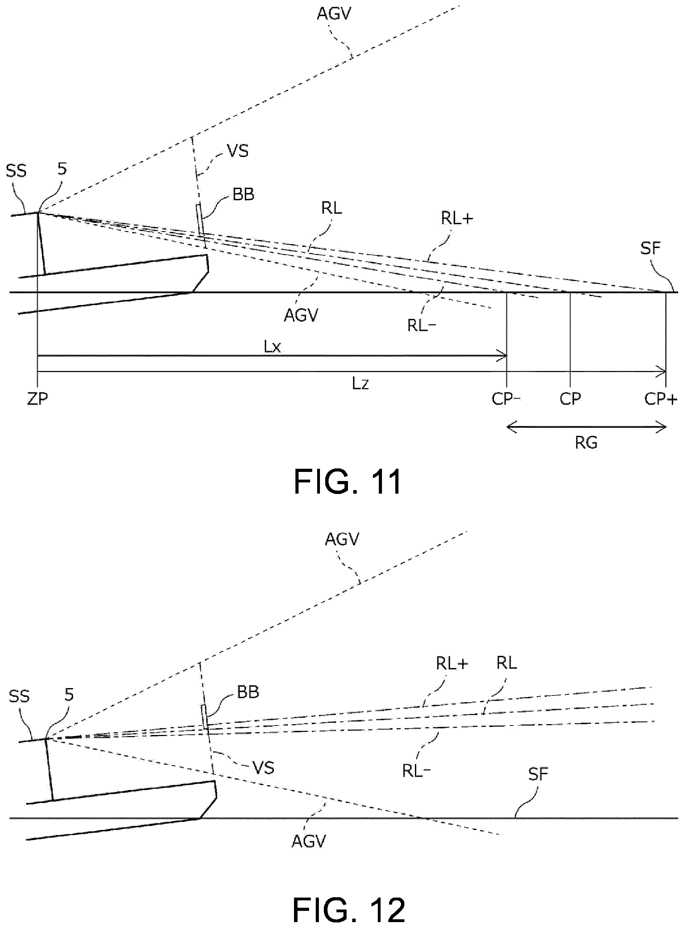

As shown in FIG. 11, RL- represents the lower limit of the error range of the sight line RL in the vertical direction. CP- represents the horizontal position of an intersection between RL- and the water surface SF. Lx represents the distance (minimum distance) from the horizontal position ZP of the camera 5 to the intersection point CP-.

RL+ represents the upper limit of the error range of the sight line RL in the vertical direction. CP+ is a horizontal position of the intersection between RL+ and the water surface SF. LZ represents a distance (maximum distance) from the horizontal position ZP of the camera 5 to the intersection CP+.

RG represents the distance range from the own ship to the target SH. The distance range RG is a range corresponding to the error range of the line sight RL in the vertical direction. That is, the distance range RG is a range between the intersection CP- and the intersection CP+, and is a range of being equal to or greater than the minimum distance Lx and equal to or less than the maximum distance Lz.

In the first estimating means, the distance estimating unit 15 estimates the distance range RG based on the in-image position of the lower end of the region of the target in the image. As shown in FIGs. 10 and 11, the distance estimating unit 15 calculates the estimated distance Ly based on the position of the lower end of the boundary box BB on the virtual screen VS, and calculates the distance range RG with the estimated distance Ly as reference.

The estimated distance Ly is calculated based on the height and the posture of the camera 5, the view angle AGV of the camera 5 in the vertical direction, and the angle AL from the lower end of the virtual screen VS to the lower end of the boundary box BB.

More specifically, in addition to the height and the posture of the camera 5, the estimated distance Ly is calculated further based on camera parameters, such as the focal distance, the optical center, and the distortion parameter, etc., of the camera 5, which represent camera parameters, to take into consideration camera parameters of a perspective projection model.

In addition, the distance estimating unit 15 calculates the estimated distance Ly based on the posture of the own ship detected by the GNSS compass 31. Since the posture of the camera 5 changes in accordance with the posture of the own ship, by using the posture of the own ship (particularly the pitch angle), the accuracy in calculating the estimated distance Ly can be increased.

The distance estimating unit 15 sets a range of a particular size, with the estimated distance Ly as reference, as the distance range RG. As shown in FIG. 11, the distance estimating unit 15 sets, as the distance range RG, a range of being equal to or greater than the minimum distance Lx and equal to or less than the maximum distance Lz between the intersection CP- and the intersection CP+ corresponding to the error range of the sight line RL in the vertical direction.

The error factor of the sight line SL is, for example, a position error of image recognition (e.g., pixel expansion/contraction, time delay, etc.), an image distortion correction error, a setting error of the camera 5 (also a camera posture information error in the case of a PTZ camera), or an own ship posture information error, etc.

In the example, a range of a particular size having considered these errors is set as the error range. That is, the distance range RG is acquired by setting, as the error range, a range between RL- and RL+ in which a particular angle in the vertical direction is added to or subtracted from the sight line RL. However, the disclosure is not limited thereto. A range between the minimum distance Lx and the maximum distance Lz in which a particular size in the distance direction is added to or subtracted from the estimated distance Ly may also be set as the distance range RG.

As shown in FIG. 6, in the case where the cloud CL, etc., on the horizon HZ is erroneously recognized as the target, the boundary box BB may appear above the horizon HZ. Therefore, as shown in FIG. 12, in the case where the distance range estimated based on the position of the lower end of the boundary box BB is located above the horizon (that is, in the case where the distance range becomes infinitely large), the distance estimating unit 15 may discard the detection of the target.

The case where the distance range is located above the horizon refers to a case where the error range of the sight line RL (the range between RL- and RL+) is located above the horizon, and particularly refers to a case where RL-, which indicates the lower limit of the error range of the sight line RL, does not intersect with the water surface SF. The position of the horizon is calculated based on the height and the posture of the camera 5. However, the disclosure is not limited thereto. The position of the horizon may also be extracted from the image through image recognition.

The detection of the target may be discarded by, for example, not registering target data in the camera management DB 22, or deleting target data registered in the camera management DB 22.

### [Second estimating means]

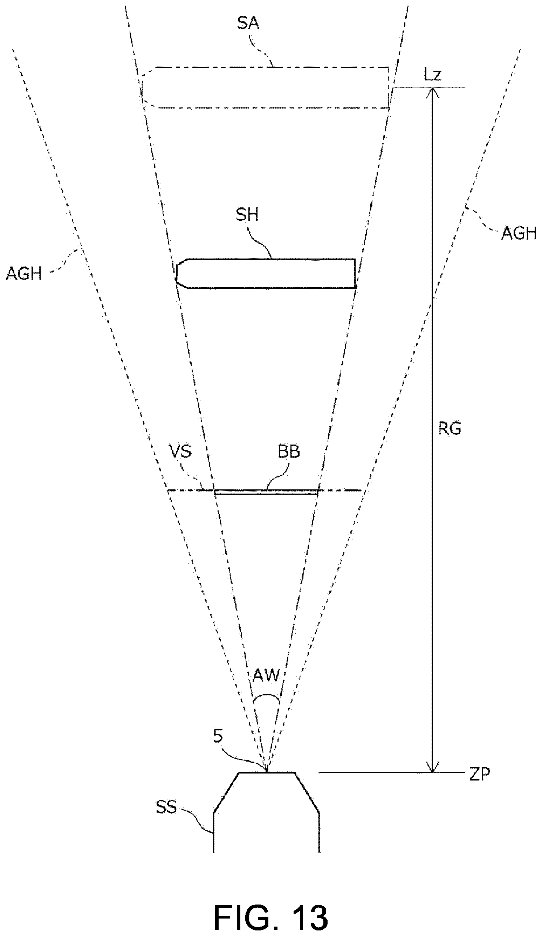

A second estimating means for the distance range by the distance estimating unit 15 is described. FIGs. 13 to 17 are diagrams and tables for illustrating the second estimating means. SS represents the own ship, SH represents the target, and ZP represents the horizontal position of the camera 5 mounted in the own ship SS.

AGH represents the view angle of the camera 5 in the horizontal direction. VS represents a virtual screen that serves as an image. BB represents the boundary box (see FIG. 4) set in the image.

AW is an angle corresponding to the width of the boundary box BB in the horizontal direction. The angle AW is calculated based on the view angle AGH of the camera 5 in the horizontal direction, the width of the virtual screen VS in the horizontal direction, and the width of the boundary box BB in the horizontal direction.

The width of the virtual screen VS in the horizontal direction is the width (number of pixels) of the image in the horizontal direction. The width of the boundary box BB in the horizontal direction is the width (number of pixels) of the boundary box BB disposed in the image in the horizontal direction.

In the second estimating means, the distance estimating unit 15 estimates the distance range RG of the target SH based on the width of the region of the target in the horizontal direction and an assumed length in the image. Specifically, the distance estimating unit 15 calculates the maximum distance Lz from the own ship SS to the target SH and sets a range of being equal to or less than the maximum distance Lz as the distance range RG.

In the example of FIG. 13, the distance estimating unit 15 assumes that the width of the boundary box BB in the horizontal direction on the virtual screen VS corresponds to the full length (assumed maximum length) of a virtual ship SA of the largest size among the world, for example, calculates the distance to the assumed ship SA, and sets the distance as the maximum distance Lz from the own ship SS to the target SH.

That is, when the target SH is at a position further than the maximum distance Lz, the target SH may be larger than the virtual ship SA of the largest size among the world. Therefore, the distance to the virtual ship SA is set as the maximum distance Lz.

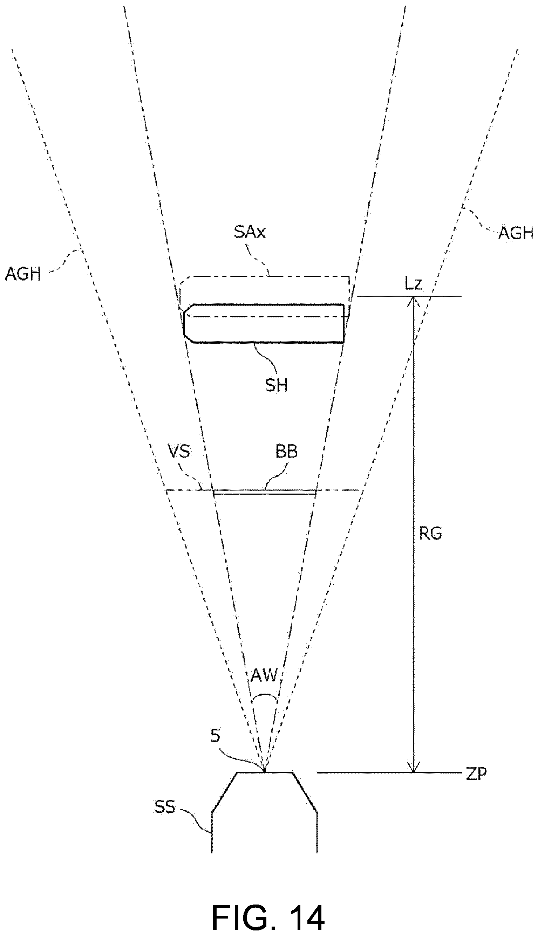

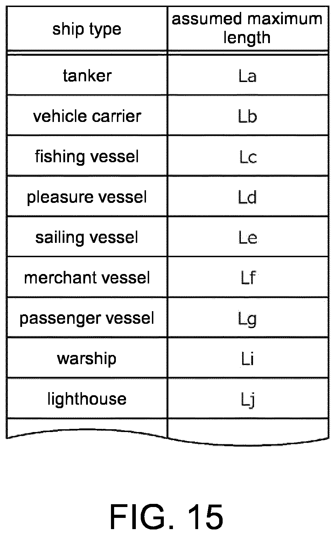

In the example of FIGs. 14 and 15, the distance estimating unit 15 estimates the distance range RG based on a particular assumed length in accordance with the type of the ship of the target SH estimated by the image recognizing unit 14. The image recognizing unit 14 is an example of a ship type acquiring unit.

Specifically, a table in which ship types and assumed maximum lengths are associated as shown in FIG. 15 is prepared in the memory, and the distance estimating unit 15 acquires the assumed maximum length corresponding to the ship type estimated by the image recognizing unit 14 and uses the assumed maximum length in estimating the distance range RG.

The distance estimating unit 15 assumes that the width of the boundary box BB in the horizontal direction on the virtual screen VS corresponds to the full length (assumed maximum length) of a virtual ship SAx of the largest size of the estimated ship type, for example, calculates the distance to the assumed ship SAx, and sets the distance as the maximum distance Lz from the own ship SS to the target SH.

In this way, by further considering the ship type of the target SH, the accuracy in estimating the distance range RG can be increased.

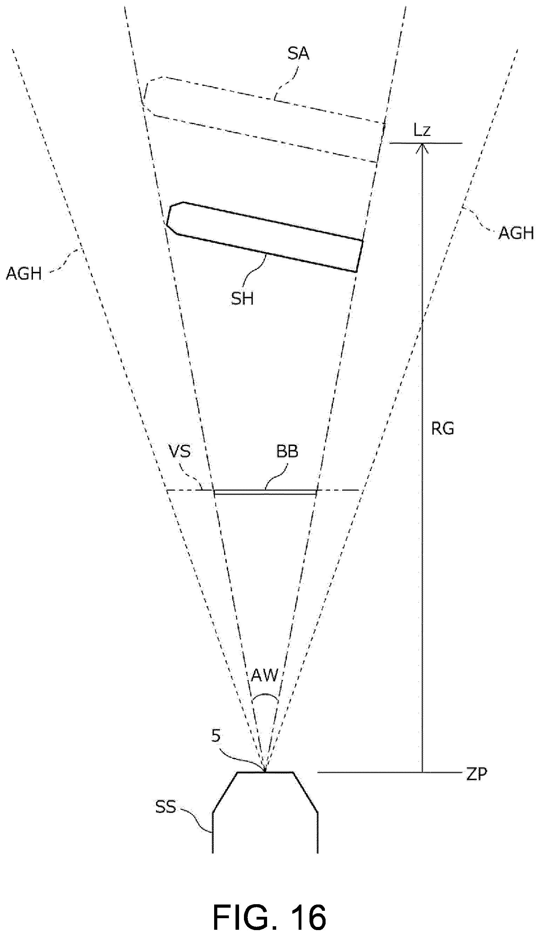

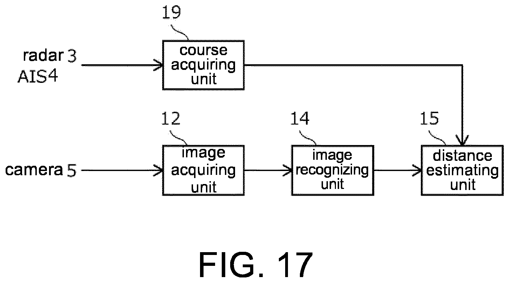

In the example of FIGs. 16 and 17, the course acquiring unit 19 acquires the course of the target SH detected by a detecting apparatus, such as the radar 3 or the AIS 4, and the distance estimating unit 15 estimates the distance range RG further based on the course of the target SH acquired by the course acquiring unit 19.

Specifically, the distance estimating unit 15 assumes that the width of the boundary box BB in the horizontal direction on the virtual screen VS corresponds to the apparent length of the ship SA facing the course acquired by the course acquiring unit 19, calculates the distance to the ship SA, and sets the distance as the maximum distance Lz from the own ship SS to the target SH. The 4apparent length of the ship SA is calculated based on the full length and the course of the ship SA.

In this way, by further considering the course of the target SH, the accuracy in estimating the distance range RG can be increased. It may also be that, in place of the course of the target SH, the bow orientation of the target SH detected by the AIS 4 may also be used to estimate the distance range RG.

Although the embodiments of the disclosure have been described above, the disclosure is not limited thereto. It goes without saying that various modifications can be made by those skilled in the art.

Although in the above embodiment, the target is identified based on the distance range of the target estimated by the estimation method from the image imaged by a monocular camera, the disclosure is not limited thereto. For example, the target may also be identified based on the distance range of the target measured by a stereo camera, for example.

### Reference Signs List

1: Target monitoring device; 2: Display unit; 3: Radar; 4: AIS; 5: Camera; 6: GNSS receiver; 7: Gyro compass; 8: ECDIS; 9: Wireless communicating unit; 10: Ship steering control unit; 20: Control unit; 11: Data acquiring unit; 12: Image acquiring unit; 13: Posture detecting unit; 14: Image recognizing unit; 15: Distance estimating unit; 16: Target identifying unit; 17: Ship steering determining unit; 18: Display control unit; 21: Target management DB; 22: Camera management DB; 100: Target monitoring system.

## Claims

1. A target monitoring system, comprising:
a camera, mounted in a ship;
a detecting apparatus, mounted in the ship and detecting an actual position of a target present around the ship;
an image recognizing unit, detecting an in-image position of the target comprised in an image imaged by the camera;
a distance estimating unit, estimating a range of a distance from the ship to the target based on the in-image position of the target; and
a target identifying unit, identifying the target detected from the image and the target detected by the detecting apparatus based on the range of the distance that is estimated and the actual position that is detected.

2. The target monitoring system as claimed in claim 1, wherein the image recognizing unit detects a region of the target in the image, and
the distance estimating unit estimates the range of the distance based on an in-image position of a lower end of the region of the target.

3. The target monitoring system as claimed in claim 2, wherein the distance estimating unit sets, as the range of the distance, a range of a particular size with a distance estimated based on the in-image position of the lower end of the region of the target as reference.

4. The target monitoring system as claimed in claim 2 or 3, wherein the distance estimating unit discards detection of the target in a case where the range of the distance is above a horizon.

5. The target monitoring system as claimed in claim 4, wherein the distance estimating unit sets a position of the horizon based on a height and a posture of the camera.

6. The target monitoring system as claimed in claim in any one of claims 2 to 5, further comprising a posture detecting unit, detecting a posture of the ship,
wherein the distance estimating unit estimates the range of the distance further based on the posture of the ship.

7. The target monitoring system as claimed in claim 1, wherein the image recognizing unit detects a region of the target in the image, and
the distance estimating unit estimates the range of the distance based on a width of the region of the target in the horizontal direction and a particular assumed length.

8. The target monitoring system as claimed in claim 7, wherein the distance estimating unit estimates a maximum distance from the ship to the target.

9. The target monitoring system as claimed in claim 7 or 8, further comprising a ship type acquiring unit, acquiring a ship type of the target,
wherein the distance estimating unit estimates the range of the distance based on the particular assumed length in accordance with the ship type of the target.

10. The target monitoring system as claimed in any one of claims 7 to 9, further comprising a course acquiring unit, acquiring a course of the target,
wherein the distance estimating unit estimates the range of the distance based on the particular assumed length in accordance with the course of the target.

11. The target monitoring system as claimed in any one of claims 1 to 10, wherein, in a case where a plurality of targets detected by the detecting apparatus are present within the range of the distance that is estimated, the target identifying unit identifies the target detected from the image as one closest to the ship among the targets.

12. The target monitoring system as claimed in any one of claims 1 to 11, wherein the distance estimating unit estimates the range of the distance based on a height, a posture, and a camera parameter of the camera.

13. The target monitoring system as claimed in any one of claims 1 to 12, wherein the detecting apparatus is a radar, and
the target monitoring system further comprises a display unit displaying the range of the distance on a radar image based on echo data detected by the radar.

14. The target monitoring system as claimed in any one of claims 1 to 12, wherein the detecting apparatus is an automatic identification system (AIS).

15. The target monitoring system as claimed in any one of claims 1 to 12, wherein the detecting apparatus is an electronic charge display and information system (ECDIS).

16. A target monitoring method, comprising:
acquiring an image imaged by a camera mounted in a ship;
detecting an in-image position of a target comprised in the image;
estimating a range of a distance from the ship to the target based on the in-image position of the target; and
acquiring an actual position of the target detected by a detecting apparatus mounted in the ship and present around the ship; and
identifying the target detected from the image and the target detected by the detecting apparatus based on the range of the distance that is estimated and the actual position that is detected.

17. A program, executed by a computer to:
acquire a range of a distance from a ship to a target that is estimated based on an in-image position of the target detected in an image imaged by a camera mounted in the ship;
acquire an actual position of the target detected by a detecting apparatus mounted in the ship and present around the ship; and
identify the target detected from the image and the target detected by the detecting apparatus based on the range of the distance that is estimated and the actual position that is detected.
